# EUROPÄISCHE PATENTSCHRIFT

(11) **EP 1 043 934 B1**
(45) Veröffentlichungstag und Bekanntmachung des Hinweises auf die Patenterteilung: **01.10.2003**
(21) Anmeldenummer: 98962126.3
(22) Anmeldetag: 23.12.1998
(51) Int. Cl.: A21B 3/04, A21B 1/40

(54) **BACKVORRICHTUNG UND -VERFAHREN**
METHOD AND DEVICE FOR BAKING
PROCEDE ET DISPOSITIF DE CUISSON AU FOUR

(30) Priorität: 29.12.1997 AT 218797
(43) Veröffentlichungstag der Anmeldung: 18.10.2000
(73) Patentinhaber: Success-Marketing, Unternehmensberatungsgesellschaft m.b.H., 4040 Linz (AT)
(72) Erfinder: HOFER, Wolfgang, A-4040 Linz (AT)
(74) Vertreter: Secklehner, Günter, Dr.
(86) Internationale Anmeldenummer: AT9800321
(87) Internationale Veröffentlichungsnummer: WO99033347

(56) Entgegenhaltungen:
- EP-A- 0 648 420
- EP-A- 0 653 900
- WO-A-98/52418

## Beschreibung

Die Erfindung betrifft eine Vorrichtung zur Herstellung von Backwaren und ein Verfahren zum Garen und/oder Backen von Lebensmitteln oder Backwaren, wie sie in den Oberbegriffen der Ansprüche 1 und 18 beschrieben sind.

Es sind bereits Vorrichtungen zur Herstellung von Backwaren, insbesondere zum Garen und/oder Backen von Lebensmitteln oder Backwaren, sowie auch entsprechende Verfahren bekannt. So ist es aus der AT 401 707 B bekannt, die Temperaturen und die Luftfeuchtigkeit sowohl bei der Teigzubereitung als auch in der sogenannten Ruhselzeit zu definieren. Gleichermaßen wird auch die Hauptgare vor ihrem Ende abgebrochen. Dadurch soll eine frühzeitige Hautbildung im Bereich der Backwaren verhindert werden, um bei einem späteren Dampfausbruch, der beim Backen von zuvor tiefgefrorenen Backwaren auch zu einem relativ späten Zeitpunkt des Gar- bzw. Backvorgangs auftritt, ein Abplatzen dieser Haut im Bereich der Oberfläche der Backware zu verhindern. Betreffend die Behandlung der Backware während des Backens wird nur festgestellt, daß die Backware nach dem Auflegen auf das Backblech mit Wasser bespritzt und dann unter Verwendung von möglichst viel Dampf (Schwaden) gebacken werden soll, wobei sowohl Heißluftöfen als auch Öfen mit ruhender Luft verwendet werden können. Nachteilig ist hierbei, daß die frühe Hautbildung bei Backwaren während des zur endgültigen Fertigstellung derselben durchgeführten Backvorganges nicht sicher verzögert oder verhindert werden kann.

Aus der EP 0 648 420 A ist ein Ofen zum Backen von Brot bekannt. Beheizt wird dieser Ofen bevorzugt mit Thermoöl, welches durch Leitungen im Bereich der Wände gefördert wird und wird mit Hilfe eines Temperaturfühlers die Temperatur im Backraum gesteuert. Zusätzlich weist dieser Ofen einen Feuchtigkeitsfühler zur Bestimmung der Konzentration der Feuchtigkeit auf. Für die Regelung der Feuchte ist der Ofen mit einer Dampf- und einer Luftzuführleitung verbunden. Für den Fall, daß zu viel Feuchte im Backraum entsteht, verfügt der Ofen weiters über einen Saugzug, durch den Schwaden aus dem Backraum abgeführt werden können.

Aus der EP 0 653 900 A ist weiters ein Ofen zum Kochen von Lebensmitteln bekannt. Auch dieser Ofen verfügt sowohl über einen Temperatur- als auch einen Feuchtefühler, um damit die klimatischen Bedingungen im Ofenraum entsprechend einzustellen. Neben einer Einrich tung zur Beheizung mit Dampf weist der Ofen zusätzlich eine Einrichtung zur Abgabe von Mikrowellenenergie auf. Mit Hilfe einer Einrichtung zur Vorwahl der Kochmethode kann einerseits ein trocknendes und andererseits ein "nasses" Kochverfahren gewählt werden. Zur Regulierung der Feuchte im Kochraum weist dieser Ofen einen gegebenenfalls beheizten Dampfgenerator in Form eines Adsorbers auf, über den je nach gewähltem Kochverfahren entweder Feuchtigkeit in den Kochraum abgegeben öder aus dem Kochraum aufgenommen wird. Nicht vorgesehen ist jedoch bei diesem Ofen, daß über die Dauer des Kochprozesses welchselnde Feuchtegrade in Abhängigkeit von den zu kochenden Lebensmitteln eingestellt werden, d.h., es ist nicht vorgesehen, während eines Kochvorganges beide genannten Kochvarianten zu kombinieren.

Die Aufgabe der vorliegenden Erfindung liegt darin, eine Vorrichtung der eingangs genannten Art sowie ein Verfahren zum Garen und/oder Backen von Lebensmittel oder Backwaren zu schaffen, mit dem der Gar- bzw. Backvorgang universell auf unterschiedliche Einsatzfälle angepaßt werden kann.

Diese Aufgabe der Erfindung wird durch die Merkmale im Anspruch 1 gelöst. Vorteilhaft ist hierbei, daß durch die laufende Überwachung eines Soll- und eines Ist-Wertes der Luftfeuchtigkeit und/oder der Temperatur im Backraum, gegebenenfalls bezogen auf die Gar- bzw. Backtemperatur und/oder die Gar- bzw. Backzeit, ein zu starkes Austrocknen oder eine zu hohe Luftfeuchtigkeit im Bereich der Oberfläche der Backwaren ebenso verhindert werden kann wie eine unerwünschte oder zu späte Hautbildung im Bereich der Oberfläche von Backwaren. Darüberhinaus kann ein gleichmäßiges Gar- und Backergebnis bei den Lebensmitteln bzw. Backwaren erreicht werden.

Dadurch ist es auch einfach möglich, den Austritt von Wasserdampf bzw. anderen Bestandteilen aus den Lebensmitteln bzw. den Backwaren besser zu steuern und kann damit sowohl das Gar- bzw. Backergebnis, nämlich das Aussehen der Lebensmittel bzw. der Backware als auch der Haltbarkeit und der Frischezustand, insbesondere die Reschheit, über längere Zeit aufrecht erhalten werden. Ein weiterer Vorteil dieser Lösung liegt darin, daß nunmehr der jeweilige Feuchtigkeitsgehalt und/oder die jeweilige Temperatur der in den Backraum eingebrachten Lebensmittel bzw. Backwaren ohne eine zusätzliche Behandlung, z.B. einem weiteren Meßvorgang oder dgl., festlegbar ist.

Mit dem Kältefühler ist es auf vorteilhafte Weise möglich, das Volumen an eingeschossenen, unfertigen Produkten auf einfache Weise zu bestimmen, sodaß in der Folge das richtige Backverfahren, d.h. die jeweiligen bestimmten Temperaturverläufe und der Gehalt an Feuchtigkeit, darauf abgestimmt werden kann.

Durch die Weiterbildung nach Anspruch 2 kann der Ist-Wert der Feuchtigkeit und/ oder Temperatur zur Gänze bei dem nachfolgenden Gar- bzw. Backvorgang mitberücksichtigt werden und ist es dadurch auch möglich, den Temperaturverlauf und die Zeitdauer des Gar- bzw. Backvorganges hinsichtlich der erzielbaren Qualität einem Optimum zwischen dem gewünschten Gar- bzw. Backergebnis und der Gar- bzw. Backzeit universell anzupassen.

Vorteilhaft ist eine weitere Ausbildung nach Anspruch 3, da dadurch ein feinfühliger Regelungsvorgang der Temperatur im Backraum erzielbar ist. Damit kann die Differenz zwischen Soll- und Ist-Wert bzw. die Abweichung vom Soll-Wert der Temperatur und/oder der Luftfeuchtigkeit gering gehalten werden.

Durch die weitere Ausführungsvariante nach Anspruch 4 wird auch eine rasche Anpassung der Feuchtigkeitswerte an unterschiedliche Produktionszustände bzw. eine Anpassung an einen optimalen Gar- bzw. Backprozeß ermöglicht.

Vorteilhaft ist aber auch eine Ausbildung nach Anspruch 5, da damit eine sich über den gesarnten Gar- bzw. Backvorgang hinziehende Überwachung möglich ist. Vor allem ist dadurch eine kontinuierlich fortlaufende Überwachung des gesamten Gar- bzw. Backvorganges erzielbar, wobei je nach der Gar- bzw. Backdauer und in Abhängigkeit von der Empfindlichkeit des zu garenden Lebensmittels bzw. der zu backenden Backware die Zeitdauer zwischen den einzelnen Ermittlungen des Ist-Wertes der Luftfeuchtigkeit und/oder Temperatur und/oder Zeitdauer und/oder der Ermittlung der Differenz universell an unterschiedliche Einsatzfälle angepaßt werden kann.

Durch die Weiterbildung nach Anspruch 6 ist es aber auch möglich, die Temperatur und/oder die Temperatur der Luftfeuchtigkeit und/oder die Luftfeuchtigkeit bzw. die Differenz zwischen diesen und den zugehörigen Soll-Werten in Abhängigkeit von der Zeitdauer des Gar- bzw. Backvorganges zu ermitteln.

Eine feinfühlige Überwachung insbesondere aber Regelung des Gar- bzw. Backvorganges wird durch die Ausgestaltung der Steuervorrichtung nach Anspruch 7 erzielt.

Durch die Auswahlmöglichkeiten beim Einbringen des Fluides nach Anspruch 8 oder 9 wird mit Vorteil eine Anpassung an die gewünschte Veränderung der Luftfeuchtigkeit im Backraum ermöglicht.

Durch die Ausgestaltung nach Anspruch 10 wird eine gleichmäßige Luftfeuchtigkeit und/oder Temperatur über das gesamte Volumen des Backraums in einfacher Weise erzielt.

Vorteilhaft ist bei einer Weiterbildung nach Anspruch 11, daß mit Hilfe eines Kerntemperaturfühlers beispielsweise Tiefkühlteiglinge schonend auf die richtige Gartemperatur gebracht werden können.

Durch die Weiterbildung nach Anspruch 12 können Tiefkühlteiglinge, die nur wenig oder ungegart sind, in den Backraum direkt eingeschossen und durch Mikrowellenenergie aufgetaut werden.

Mit der Weiterbildung nach Anspruch 13 kann der Temperaturverlauf auch bei erhöhten Temperaturen nachverfolgt und somit eine entsprechende Regelung durchgeführt werden.

Eine Reinigungsvorrichtung nach den Ansprüchen 14 und 15 erlaubt es auf vorteilhafte Weise, den Backraum der erfindungsgemäßen Vorrichtung direkt nach jedem Backvorgang zu reinigen, ohne daß dazu zusätzliche technische Geräte vonnöten sind.

Durch einen Kühlkreislauf gemäß den Ansprüchen 16 und 17 kann die Lagerung der Lebensmittel bzw. Backwaren im rohen bzw. halbfertigen Zustand über eine bestimmte Zeitdauer direkt in der erfindungsgemäßen Vorrichtung erfolgen.

Die Aufgabe der Erfindung wird aber auch durch ein Verfahren nach Anspruch 18 gelöst. Vorteilhaft ist bei diesem Verfahren, daß durch die laufende Überwachung der Ist-Werte der Luftfeuchtigkeit und/oder der Temperatur im Backraum und durch den ständigen Vergleich und die Differenzbildung mit den Soll-Werten eine universelle Anpassung des Gar- bzw. Backablaufes an ein günstiges Ergebnis des Gar- bzw. Backvorganges möglich ist. Mit dem Kältefühler ist es auf vorteilhafte Weise möglich, das Volumen an eingeschossenen, unfertigen Produkten auf einfache Weise zu bestimmen, sodaß in der Folge das richtige Backverfahren, d.h. die jeweiligen bestimmten Temperaturverläufe und der Gehalt an Feuchtigkeit, darauf abgestimmt werden kann.

Gemäß dem Verfahren nach Anspruch 19 kann die Vorrichtung mit Wasserdampf vorgewärmt werden, sodaß in dieser ein ausreichend hoher Gehalt an Luftfeuchtigkeit für die Verarbeitung von Lebensmitteln oder Backwaren zur Verfügung gestellt wird. Die Vorwärmung auf eine Temperatur im angegebenen Temperaturbereich ermöglicht zudem mit Vorteil eine schonende Vorbereitung der zu verarbeitenden Produkte auf den Gar- und/oder Backvorgang. Die Verwendung von Heißluft eröffnet zudem den Vorteil der gezielten Einstellung der relativen Luftfeuchtigkeit.

Von Vorteil sind auch Weiterbildungen nach den Ansprüchen 20 und 21, da damit mit großer Sicherheit eine Luftfeuchtigkeit im Backraum zur Verfügung gestellt werden kann, die ein Austrocknen der zu verarbeitenden Lebensmittel verhindert.

Durch die Ausbildung gemäß Anspruch 22 wird ein Verfahren geschaffen, bei dem die Grünlinge sowohl mit Mikrowellenenergie als auch mit Dampf erwärmt werden, wird mit Vorteil erreicht, daß die Grünlinge mit Hilfe von Mikrowellenenergie schonend auf eine erhöhte Temperatur gebracht werden, ohne daß dabei der Hefetrieb gestartet wird und daß zudem im Backraum die erforderliche Luftfeuchtigkeit zur Verfügung gestellt werden kann. Somit wird einerseits ein unerwünschtes Aufspringen der Oberfläche der Grünlinge verhindert und andererseits die Qualität der fertigen Produkte dahingehend verbessert, daß diese ein resches und saftiges Geschmackserlebnis vermitteln.

Vorteilhaft ist auch eine Weiterbildung nach Anspruch 23, womit die benötigte Mikrowellenenergie zur Erwärmung der Grünlinge auf die jeweils produktspezifischen Eigenarten der Grünlinge angepaßt werden kann, sodaß der Ablauf der Erwärmung der Grünlinge ohne Qualitätsverlust vonstatten geht.

Vorteilhaft sind auch die Maßnahmen nach Anspruch 24, da durch die Überwachung der Differenz der Soll- und Ist-Werte auch die Abweichung des Ist-Wertes vom Soll-Wert minimal gehalten werden kann, sodaß äußere Bedingungen wie z.B. Leistungsschwankungen in der Energieversorgung in der Heizvorrichtung sowie unterschiedliche Beschickungsmengen des Backraums und selbstverständlich auch Unterschiede in der Feuchtigkeit und/oder Temperatur der zum Garen bzw. Backen eingebrachten Lebensmittel bzw. Backwaren in einfacher Weise vollautomatisch mitberücksichtigt werden, ohne daß es weiterer Arbeitsvorgänge bedarf. '

Bei der Weiterbildung des Verfahrens nach Anspruch 25 ist von Vorteil, daß ein optimales Feuchtigkeitsverhältnis während der Auftauphase eingestellt werden kann.

Durch die Durchführung der Restgare nach Anspruch 26 wird mit Vorteil erreicht, daß die Gesamtproduktionszeit auf ein Minimum reduziert werden kann.

Eine Weiterbildung nach Anspruch 27 eröffnet den Vorteil, daß die zu verarbeitenden Produkte auf ein gewünschtes Maximalvolumen ausgedehnt werden können.

Bei den Weiterbildungen nach den Ansprüchen 28 und 29 ist von Vorteil, daß einerseits während des Backabschnittes die produkteigene Kernfeuchtigkeit erhalten bleibt und daß andererseits durch Krustenbildung eine frühzeitige Austrocknung hintangehalten werden kann.

Durch das Besprühen der fertigen heißen Produkte nach Anspruch 30 kann eine für Kunden ansprechende Oberfläche der Produkte hergestellt werden.

Vorteilhaft ist auch die Ausbildung nach Anspruch 31, da damit Tiefkühlteiglinge schonend auf die richtige Gartemperatur gebracht werden können.

Mit Hilfe der Verfahrensweiterbildung nach Anspruch 32 ist es auf vorteilhafte und einfache Weise möglich, den jeweiligen Temperaturverlauf für das erfindungsgemäße Verfahren an das jeweilige Volumen an eingeschossenen Lebensmitteln und/oder Backwaren anzupassen.

Mit einer Weiterbildung des Verfahrens nach Anspruch 33 kann auf vorteilhafte Weise das Verfahren dahingehend erweitert werden, daß beispielsweise Teiglinge in betriebsarmen Zeiten vorbereitet werden können und diese dann während einer Hauptgeschäftszeit bzw. kurz davor der Endfertigung unterzogen werden.

Die Weiterbildungen nach den Ansprüchen 34 und 35 ermöglichen eine halbautomatische Reinigung, wobei der Backraum umweltschonend, beispielsweise nur mit heißem Dampf, einer Reinigung unterzogen wird.

Die Erfindung wird im nachfolgenden anhand eines in der Zeichnung dargestellten Ausführungsbeispieles näher erläutert.

Es zeigt:

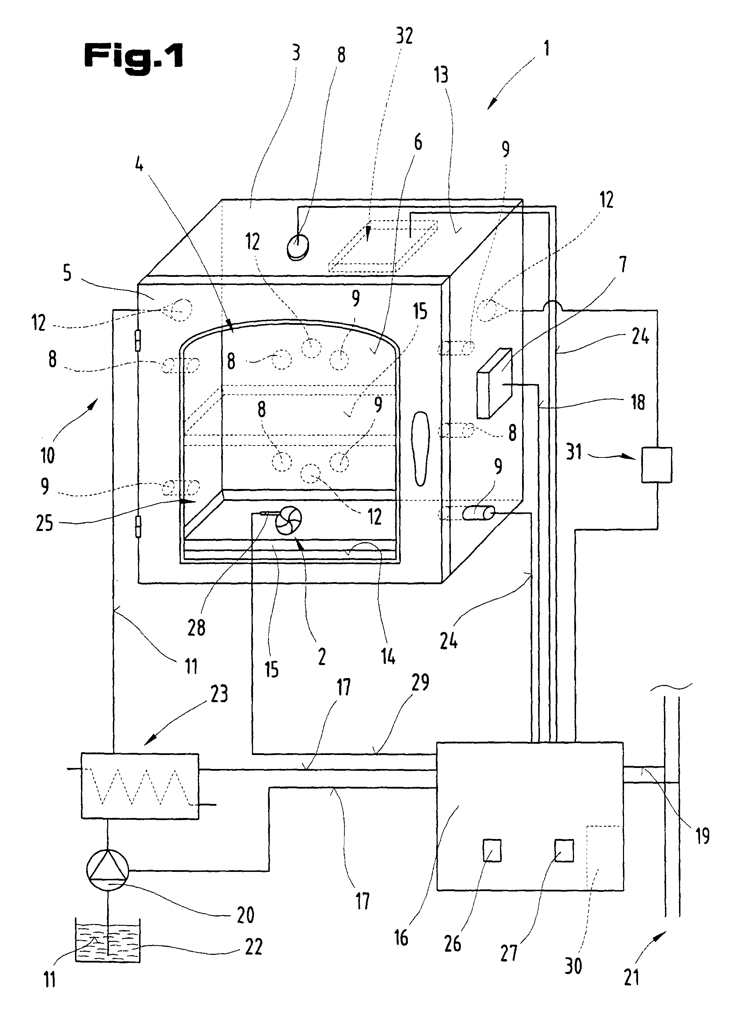

- Fig. 1: eine erfindungsgemäße Vorrichtung zum Herstellen von Backwaren in stark vereinfachter, schematischer Darstellung und Seitenansicht mit der zugehörigen Steuervorrichtung in Art eines Blockschaltbildes.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

In Fig. 1 ist eine Vorrichtung 1 zum Herstellen von schematisch angedeuteten Backwaren 2, z.B. Semmeln, Kipferln und dgl., dargestellt. Ein in einem Gehäuse 3 angeordneter Backraum 4 ist über eine Tür 5 von einer Frontseite her zugänglich, wobei die Tür 5 zur Überwachung des Gar- bzw. Backvorganges mit einer eventuell durchsichtigen Glasscheibe 6 ausgestattet ist.

Dem Backraum 4 ist eine Heizvorrichtung 7 zum Erwärmen des Backraums 4 zugeordnet. Diese Heizvorrichtung kann aus beliebigen, aus dem Stand der Technik bekannten Ausbildungen oder Ausstattungen sein und mit den unterschiedlichsten Medien wie Gas, Strom, Öl oder Festbrennstoffen betrieben werden. Selbstverständlich sind als Heizvorrichtungen 7 auch andere Wärmeenergieerzeuger wie Mikrowellen, Hochfrequenzanlagen usw. verwendbar bzw. kann die Energiezufuhr auch über Warmluft erfolgen.

Im Inneren des Backraums 4 ist zumindest ein Meßwertgeber 8 zum Feststellen eines Ist-Wertes der Temperatur und zumindest ein weiterer Meßwertgeber 9 zur Feststellung des Ist-Wertes der Luftfeuchtigkeit im Backraum 4 angeordnet. Des weiteren ist dem Backraum 4 eine Zufuhrvorrichtung 10 für ein Fluid 11 zur Regulierung der Feuchtigkeit und/oder Temperatur im Backraum 4 zugeordnet. Diese Zufuhrvorrichtung 10 umfaßt zumindest ein im Backraum 4 angeordnetes Austragelement 12 für das Fluid 11.

Selbstverständlich können auch mehrere Austragelemente 12 vorgesehen sein, die über einen Innenraum oder eine innere Oberfläche des Backraums 4 in beliebiger Anordnung verteilt vorgesehen sein können.

Unter anderem ist es auch möglich, das Fluid 11 insbesondere dann, wenn es in flüssiger Form eingebracht wird, in Aufnahmebehälter im Inneren des Backraums 4 einzuleiten, sodaß es dort durch die im Backraum 4 vorherrschende Wärme in den gas- bzw. dampfförmigen Zustand übergeführt werden kann.

Vorteilhaft kann es sich erweisen, wenn die Austragelemente 12, bei welchen es sich z.B. um Sprühdüsen, Zerstäuber und dgl. handeln kann, über eine Deckplatte 13 des Backraums 4 gleichmäßig verteilt angeordnet sind, da beim Einströmen des Fluides 11 unabhängig davon, ob im flüssigen, gas- oder dampfförmigen Zustand, durch den Temperaturunterschied des Dampfes gegenüber der Lufttemperatur im Backraum 4 dieser Dampf schwerer ist und daher in Richtung eines Bodens 14 des Backraums 4 absinkt und somit über nahezu das gesamte Volumen des Backraums 4 eine gleichmäßige Verteilung desselben erzielt wird.

Werden in einem Backraum 4 jedoch mehrere Backbleche 15 zur Aufnahme von Backwaren 2 eingesetzt, kann es sich als vorteilhaft erweisen, über den Umfang des Backraums 4, zumindest über dessen Seitenwände und dessen Rückwand, jeweils im Bereich zwischen zwei Backblechen 15 gleichmäßig verteilt Austragelemente 12 für das Fluid 11 anzuordnen, um so jede Lage der Backwaren 2 mit entsprechender Feuchtigkeit zu versorgen bzw. die Feuchtigkeitszufuhr und Stabilisierung feinfühlig regeln zu können.

Dabei kann es sich auch als vorteilhaft erweisen, in jedem Zwischenraum Meßwertgeber 8 und 9 für den Ist-Wert der Temperatur bzw. Luftfeuchtigkeit anzuordnen, sodaß bei entsprechender Auslegung einer Steuervorrichtung 16 - wie noch später im Detail erläutert werden wird - die Soll-Werte der Temperatur und/oder Luftfeuchtigkeit jeweils unterschiedlich für jedes Backblech 15 festgelegt werden können.

Diese Steuervorrichtung 16 ist über Leitungen 17, 18, 19 mit einer Fördervorrichtung 20 für das Fluid 11, der Zufuhrvorrichtung 10, der Heizvorrichtung 7 und einer Energiequelle 21 verbunden.

Die Fördervorrichtung 20 kann das Fluid 11 aus einem Speicherbehälter 22 oder aus einem Leitungssystem entnehmen oder kann die Zufuhr des Fluides über ein von der Steuervorrichtung 16 beaufschlagtes Ventil vom Leitungssystem direkt aus erfolgen.

Zwischen der Fördervorrichtung 20 und dem Austragelement 12, oder an beliebiger anderer Stelle, ist es ebenso möglich, einen Dampferzeuger 23 anzuordnen, sodaß das Fluid 11 vom flüssigen in den dampfförmigen Zustand verbracht werden kann.

Selbstverständlich ist es aber auch möglich, neben Austragelementen 12 für das Fluid 11 in flüssiger Form auch solche zum Austragen des Fluides 11 im dampfförmigen Zustand anzuordnen, wobei über die Steuervorrichtung 16 die Fördervorrichtung 20 bzw. - wie durch die weitere Leitung 17 angedeutet - auch der Dampferzeuger 23 beaufschlagt werden können, um wahlweise das Fluid 11 in unterschiedlichen Aggregatzuständen, z.B. in Schwaden von Dampf oder Wassernebel oder mikrofeinen Tropfen, und/oder an unterschiedlichen Stellen des Backraums 4 einzubringen.

Über Leitungen 24 sind Meßwertgeber 8 für die Temperatur im Backraum 4 sowie Meßwertgeber 9 für die Feststellung der Luftfeuchtigkeit im Backraum 4 mit der Steuervorrichtung 16 verbunden.

Wie durch strichlierte Linien ersichtlich gemacht, können auch mehrere solcher Meßwertgeber 8 und/oder Meßwertgeber 9 angeordnet sein, wobei die Anordnung und Aufteilung dieser Meßwertgeber 8, 9 im Rahmen des fachmännischen Könnens des auf diesem Gebiet tätigen Fachmanns erfolgen kann und keineswegs an die gezeigten Ausführungsbeispiele gebunden oder auf diese eingeschränkt ist. Wie schematisch durch strichlierte Linien angedeutet, können derartige Meßwertgeber 8, 9 auch in einem Zwischenraum 25 zwischen zwei Backblechen 15, z.B. über den Umfang oder einen Teilumfang des Backraums 4 verteilt, angeordnet sein.

Weiters kann die Steuervorrichtung 16 mit Eingabeorganen 26, 27 für einen Soll-Wert der Feuchtigkeit bzw. der Temperatur im Backraum 4 versehen sein. Selbstverständlich ist diese Darstellung der Eingabeorgane 26, 27 nur funktionell zu verstehen und können diese Eingabeorgane 26, 27 durch beliebige andere technische Mittel, z.B. Tastaturen bei Verwendung von entsprechenden Softwareelementen oder Rechnern bzw. Personalcomputern, für oder in Verbindung mit der Steuervorrichtung 16 gebildet sein.

Die Eingabe dieser Soll-Werte für die Feuchtigkeit und Temperatur kann in Abhängigkeit von der Dauer der Gar- bzw. Backzeit ebenso erfolgen wie die Definition der Temperatur bei bestimmten Feuchtigkeitswerten oder umgekehrt bzw. kann die Festlegung der Temperatur aufgrund der abgelaufenen Gar- bzw. Backzeit in Verbindung mit der Feuchtigkeit oder die Verbindung aus der aufgelaufenen Gar- und Backzeit mit der Temperatur anhand des Soll-Wertes der Feuchtigkeit vorgegeben werden.

Mit der Vorrichtung 1 bzw. im Backraum 4 können die beliebigen Gar- und Backvorgänge vorgenommen werden und ist es somit möglich, Teiglinge für Backwaren 2, z.B. unmittelbar nach der Hauptgare oder der sogenannten Ruhselzeit, in den Backraum 4 einzubringen oder entsprechend tiefgefrorene oder vorgefrorene Backwaren, die als Teigling oder bereits vorgebacken eingefroren worden sind, zu verarbeiten.

Es kann sich z.B. bei der Verwendung von vorgefrorenen oder gefrorenen Teiglingen als vorteilhaft erweisen, in eine der Backwaren 2 eine schematisch dargestellte Sonde 28 einzuführen, die über eine Leitung 29 ebenfalls mit der Steuervorrichtung 16 verbunden sein kann, um im Inneren der Backware 2 die Temperatur und/oder die Feuchtigkeit fortlaufend zu ermitteln und diese so ermittelten Ist-Werte in die Berechnung der Soll-Werte für die Temperatur und Luftfeuchtigkeit im Backraum 4 zu verwenden.

Das Verfahren zum Garen bzw. Backen von Lebensmitteln bzw. Backwaren 2 kann nun z.B. wie folgt ablaufen:

Die Backwaren 2 werden je nach dem gewünschten Herstellungsvorgang mit oder ohne Vorbehandlung z.B. unmittelbar nach der Ruhselzeit oder in gefrorenem oder gekühltem Zustand auf ein Backblech 15 aufgelegt. Dieses Backblech 15 wird nach dem Öffnen der Tür 5 in den Backraum 4 eingebracht, insbesondere auf den entsprechenden Führungsschienen eingeschoben. Je nach dem durchzuführenden Gar- bzw. Backvorgang kann der Backraum 4 z.B. bereits auf eine gewünschte Temperatur vorgewärmt und die Luft im Innenraum des Backraums 4 auf einen gewünschten Soll-Wert der Luftfeuchtigkeit eingestellt sein. Die Vorwärmung des Backraums 4 bzw. die Vorwahl der entsprechenden Luftfeuchtigkeit im Innenraum des Backraums 4 kann ebenso über die Steuervorrichtung 16 erfolgen, wobei diese Werte in entsprechenden Arbeitsprogrammen auf unterschiedlichste Weise in aus dem Stand der Technik bekannten Formen in der Steuervorrichtung 16 hinterlegt sein können.

Je nach dem eingestellten oder ausgewählten Gar- bzw. Backprogramm wird der Ist-Wert der Temperatur und/oder der Feuchtigkeit im Backraum 4 laufend mit dem Meßwertgebern 8, 9 überwacht und werden diese Daten entweder kontinuierlich, z.B. in Echtzeit oder intermittierend in gewissen Zeitabständen oder jeweils nach Ablauf einer gewissen Zeitdauer der Garzeit oder beim Erreichen gewisser vorgewählter Temperaturstufen an die Steuervorrichtung 16 weitergeleitet. Selbstverständlich können die Zeitpunkte, zu welchen der Ist-Wert der Luftfeuchtigkeit und der Ist-Wert der Temperatur ermittelt werden, gegeneinander versetzt sein.

Zur Überwachung der Backzeit weist die Steuervorrichtung 16 einen Zeitgeber 30 auf Dieser kann auch zur Definition der Abfrage der Ist-Werte verwendet werden, die zuvor in Abhängigkeit von der Temperatur, der Dauer des Gar- bzw. Backvorganges anhand der mit den Eingabeorganen 26, 27 festgelegten Soll-Werte der Temperatur und Feuchtigkeit definiert werden. Diese Definitionen und Soll-Werte können selbstverständlich auch in entsprechende Computerprogramme integriert oder durch Dateneingabe in Speicherfeldern vordefiniert sein und werden - je nach dem Programmablauf - kontinuierlich mit den ständig einlangenden Ist-Werten der Temperatur und Feuchtigkeit verglichen.

Stellt die Steuervorrichtung 16 eine Abweichung des Ist-Wertes der Feuchtigkeit vom Soll-Wert fest, so wird z.B. durch Zufuhr von trockener Luft oder durch Entzug von Feuchtigkeit der Ist-Wert der Feuchtigkeit auf den Soll-Wert abgesenkt bzw. bei zu niederer Feuchtigkeit im Backraum 4 durch Zufuhr von Fluid 11 in flüssiger, gasförmiger oder dampfförmiger Form der Feuchtigkeitsgehalt soweit erhöht, daß der Ist-Wert wieder mit dem Soll-Wert übereinstimmt.

Um hierbei gleichzeitig eine Konstanthaltung der Temperatur, einen Temperaturanstieg oder eine Temperaturreduktion im Backraum 4 zu erreichen, kann das Fluid 11 in den unterschiedlichsten Zuständen, wie z.B. als Flüssigkeit, in den unterschiedlichsten Temperaturen, z.B. gekühlt als Dampf oder als Heißdampf oder überhitzter Dampf, eingeleitet werden, um die Temperatur gleichzeitig mit der Feuchtigkeitszunahme gleichzuhalten, abzusenken oder zu erhöhen.

Gleichzeitig oder auch unabhängig davon ist es möglich, die Temperatur entsprechend zu überwachen und bei Abweichungen des Ist-Wertes vom Soll-Wert über die Zufuhrvorrichtung 10 oder eine eigene Zufuhrvorrichtung 31 entweder kühle, gekühlte oder tiefgekühlte Luft zuzuführen, um die Temperatur abzusenken und z.B. auch Heißdampf oder Naßdampf einströmen zu lassen, um die Temperatur - zusätzlich zu der ohnehin vorhandenen Heizvorrichtung 7 - schlagartig zu erhöhen. Die Temperaturregelung kann über die Zufuhrvorrichtungen 10, 31 aber auch durch Austausch der Luft im Inneren des Backraums 4 oder durch Wärmeaustausch erfolgen. Auch bei einem Regelmechanismus für die Anpassung an den Soll-Wert ist es möglich, diesen einheitlich für den gesamten Backraum 4 zu gestalten oder abwechselnd einzeln den Backblechen 15 oder einzelnen Bereichen des Backraums 4 über geeignete Organe und Mittel zuzuordnen, die eine bereichsweise Anpassung der Temperatur an die Ist-Werte ermöglichen.

So ist es beispielsweise möglich, für die Anpassung oder Einhaltung des Soll-Wertes der Temperatur und/oder der Luftfeuchtigkeit sogenannte Schwadenbildner einzusetzen, die die Verteilung von Dampfschwaden, Heiß- oder Naßdampf im Backraum 4 bewirken.

Einer der Vorteile des vorliegenden Verfahrens liegt darin, daß durch Verwendung dieser Steuervorrichtung in der beschriebenen Art ein universeller Einsatz eines Backraums 4 für unterschiedliche Gar- und Backzwecke und andere Verfahren, wie z.B. Braten, Rösten, Dünsten, Auftauen und dgl., verwendet werden kann. Durch die Möglichkeit des Vollautomatik-Betriebes bzw. einen "Selbstlernbetrieb" braucht bei der Beschickung des Backraums nicht mehr auf die Temperatur und/oder die Feuchtigkeit bzw. die Temperatur der Feuchtigkeit und die Menge Rücksicht genommen werden. Z.B. können die Ist-Werte der Temperatur und/oder Feuchtigkeit der Lebensmittel bzw. der Backwaren 2 zusätzlich mit einer oder mehreren Sonden 28 festgestellt werden und muß bei der Regelung der Steuervorrichtung 16 auf unterschiedliche Backmengen, Temperaturen und Feuchtigkeiten der Lebensmittel bzw. Backwaren 2 im Backraum keine Rücksicht genommen werden.

Durch diese selbsttätige Regelungsautomatik wird bei dem bevorzugt kontinuierlich fortlaufenden Ermitteln der Differenz zwischen dem Soll- und Ist-Wert der Temperatur und/oder der Feuchtigkeit des Gar- bzw. Backvorganges beim Zuführen von unterschiedlichen Mengen oder Volumina von Lebensmitteln und/oder Backwaren 2, bevorzugt vor allem auch dann, wenn diese unterschiedliche Feuchtigkeiten und/oder Temperaturen aufweisen, ein optimaler Gar- und/oder Backvorgang von der Steuervorrichtung 16 - anhand der festgestellten Ist-Werte von Feuchtigkeit und/oder Temperatur - ausgewählt. Damit kann unabhängig von einer Bedienungsperson ein optimales Back- und Garergebnis auch bei verschiedenen Betriebszuständen erzielt werden, ohne daß sich manuelle Einstellfehler nachteilig auswirken oder eine Fülle von abgestuften Programmen benötigt wird, die auf die jeweils unterschiedlich vorstellbaren Mengen und/oder Temperaturen an Backgut und/oder Feuchtigkeit des Backgutes abgestellt sind. Dadurch verringert sich der Erstellungsaufwand für die Programme und somit auch der Wartungsaufwand und können Bedienungsfehler ausgeschlossen werden.

Damit können die Gar- bzw. Backprogramme auf eine maximale Auslastung des Backraums 4 abgestellt sein und wird beim Behandeln von Mindermengen im Backraum 4 der Programmablauf vollautomatisch - hinsichtlich der Temperatur und Feuchtigkeit - optimiert, sodaß unabhängig von der Beschickungsmenge ein gleichbleibendes Gar- bzw. Backergebnis erzielt wird.

Selbstverständlich ist die beschriebene Vorrichtung bzw. das Verfahren auch für alle anderen Vorgänge wie Braten, Dämpfen, Dünsten und/oder Auftauen von Lebensmitteln oder Backwaren 2 verwendbar.

Die beschriebene Vorrichtung und das Verfahren können dahingehend ergänzt werden, daß ein Mikrowellenerzeuger 32 in Verbindung mit der Vorrichtung 1 angeordnet wird, der es ermöglicht, den Backraum 4 bzw. die darin befindlichen Lebensmittel oder Backwaren 2 über Mikrowelle zu erhitzen. Vor allem in Verbindung mit der Behandlung von gefrorenen Lebensmitteln oder Backwaren 2 ist es dadurch möglich, zu Beginn der Behandlung, d.h. der Erwärmung gleichzeitig und/oder vorauseilend und/oder nach einer gewissen Einwirkzeit der Wärme auf die Lebensmittel oder die Backwaren 2, den Innenbereich der Lebensmittel oder der Backwaren 2 über die Mikrowelle zu erwärmen.

Durch diese Erwärmung des Mittelbereiches kann der dabei entstehende Wasserdampf noch leichter durch die Oberfläche, ohne Abheben der Oberflächenschichten, austreten und wird ein ungehindertes Aufgehen der Mittelbereiche der Lebensmittel und Backwaren 2 ermöglicht, sodaß das Fertiggaren bzw. Fertigbacken über das gesamte Volumen der Lebensmittel oder Backwaren 2 in etwa gleichmäßig erfolgen kann.

Weiters ist es im Rahmen der Erfindung selbstverständlich auch möglich, das erfindungsgemäße Verfahren auch mit anderen, aus dem Stand der Technik bekannten Verfahren durchzuführen.

Nach einer weiteren Ausführungsvariante des erfindungsgemäßen Verfahrens ist es mit Vorteil möglich, Lebensmittel im tiefgekühlten Zustand zu verarbeiten.

Die Verarbeitung sogenannter Grünlinge bringt den Vorteil mit sich, daß erstens die Lagerdauer derartiger Produkte deutlich verlängert werden kann und daß zweitens die Frische der fertigen Produkte gegenüber nach herkömmlichen Verfahren hergestellten Produkten gesteigert werden kann. Zudem ist es möglich, daß, wenn die Grünlinge an Produktionsorten gefertigt werden, die sich von den Produktionsorten der Endfertigung unterscheiden, Transportvolumen eingespart und somit auch die Umwelt geschont werden kann.

Zur Durchführung des Verfahrens kann der Backraum 4 bevorzugt mit Feuchtigkeit, z.B. in Form von Dampf, aufgeheizt werden. Dazu wird das Fluid 11 aus dem Speicherbehälter 22, z.B. Wasser, auf die jeweilige Verarbeitungstemperatur erhitzt, die sich nach den Erfordernissen der zu verarbeitenden Produkte, z.B. Brot, Gebäck oder dgl. richtet. Weiters ist es möglich, daß sich die zu verarbeitenden Produkte bereits während dieser Phase des Verfahrens im Backraum 4 befinden, oder daß die Produkte erst danach in den Backraum 4 eingeschossen werden.

Selbstverständlich ist es auch möglich, den Backraum 4 mit Heißluft auf die erforderliche Betriebstemperatur zu erwärmen. Die Methode der Verwendung von Feuchtigkeit birgt jedoch den Vorteil in sich, daß im Backraum 4 klimatische Bedingungen eingestellt werden können, die ein Austrocknen der zu verarbeitenden Produkte verhindern.

Das Auftauen der Tiefkühlware kann in einem Zeitraum zwischen 30 Sek. und 2 Min., bevorzugt 45 Sek. bis 1 Min. 45 Sek., bei einer Temperatur erfolgen, die im Bereich zwischen 70 °C und 120 °C, bevorzugt 90 °C bis 100 °C, liegt. Während dieses Zeitraumes ist der Soll-Wert für die Feuchtigkeit im Backraum 4 mit 100 % relativer Luftfeuchtigkeit anzunehmen. Selbstverständlich ist dies nur ein Richtwert, sodaß es durchaus möglich ist, daß die relative Luftfeuchtigkeit im Backraum 4 unter diesem Wert liegt.

Die Überwachung und Steuerung der einzelnen Fertigungsschritte im Backraum 4 kann, wie bereits in voranstehender Ausführungsvariante erwähnt, durch die Steuervorrichtung 16 erfolgen. Dazu ist es erforderlich, daß im Backraum 4 entsprechende Sensoren angebracht sind, die über Leitungen 18, 19, 24, 29 mit der Steuervorrichtung 16 verbunden sind. Im speziellen ist für die Überwachung und Steuerung des Herstellungsprozesses zumindest ein Meßwertgeber 8, beispielsweise ein Thermometer herkömmlicher Bauart, wie z.B. ein Kontaktthermometer, ein Widerstandsthermometer, ein Thermoelement oder dgl., zumindest ein Meßwertgeber 9 zur Feststellung des Ist-Wertes der Luftfeuchigkeit im Backraum 4.

Die daran anschließende Restgare erfolgt in einem Temperaturbereich zwischen 90 °C und 160 °C, bevorzugt 110 °C bis 140 °C, bei einem Ist-Wert der relativen Luftfeuchtigkeit zwischen 40 % und 90 %, bevorzugt 60 % bis 70 %.

Vor dem eigentlichen Backabschnitt, d.h. nach dem Ende der Garzeit (Restgare), ist ein Ablüften des Backraums 4 von Vorteil. Dies kann beispielsweise bei halb geöffnetem Abzug und gleichzeitigem kräftigen Aufheizen des Backraums 4 mit Heißluft durchgeführt werden. Dadurch kann ein Großteil der Feuchtigkeit aus dem Backraum 4 über den Abzug entfernt werden und wird es beispielsweise möglich, mit dem restlichen Hefetrieb der Lebensmittel und/oder Backwaren, letztere nochmals und endgültig zum gewünschten Maximalvolumen hochzuziehen. Zuviel an Feuchtigkeit im Backraum 4 würde ansonsten einen optimalen Volumenausbund der Lebensmittel, insbesondere der Tiefkühlware verhindern. Gleichzeitig kann über einen Ablauf, der beispielsweise am Backraumboden plaziert sein kann, restliches Kondenswasser abgeführt werden.

Der eigentliche Backabschnitt wird entsprechend dem Stand der Technik bei einem Temperaturbereich zwischen 180 °C und 230 °C durchgeführt. Die relative Luftfeuchtigkeit sollte dabei jedoch je nach Produkt zwischen 20 % und 80 % betragen.

An den Backabschnitt schließt sich vorzugsweise erneut der Arbeitsschritt des Ablüftens an. Bei beispielsweise halb geöffnetem Abzug soll dabei besonders schnell viel Feuchtigkeit abgeführt werden, um eine Krustenbildung an den Backwaren zu ermöglichen. Durch diesen Arbeitsschritt wird eine Art Isolationsschicht gebildet, welche dafür verantwortlich ist, daß die gebäckseigene Feuchtigkeit im Kern erhalten bleibt und eine vorzeitige Austrocknung, wie dies beispielsweise beim traditionellen Backen der Fall ist, hintangehalten wird. Die mit diesem Verfahrensschritt zu erzielende Frische bei höherer Resche geht insbesondere auch bei sommerlich hoher Luftfeuchtigkeit nicht so schnell verloren wie beim traditionellen Backen.

Um den fertig gebackenen Produkten eine glänzende Oberfläche zu verleihen, ist es möglich, die noch heißen Produkte mit Wasser im Anschluß an den letzten Backabschnitt zu besprühen.

Die Besonderheit dieses Verfahrens liegt auch darin, daß die Feuchtigkeitsanpassung an das jeweilige Produkt zwischen dem ersten und dem zweiten Schritt, d.h. zwischen der Auftauphase und der Restgarphase erfolgt.

Vorteilhaft bei diesem Verfahren ist weiters, daß die Gesamtproduktionszeit vom Auftauen der Tiefkühlware bis zum fertigen Endprodukt auf ein Minimum reduziert werden kann. Dies wird dadurch erreicht, daß, entgegen den Temperaturen von ca. 35 °C bis 45 °C, die in traditionellen Bäckereien Anwendung finden, mit entsprechend höheren Temperaturen, beispielsweise 90 °C, und erhöhter Luftfeuchtigkeit im Backraum 4 gearbeitet werden kann.

Ein weiterer Vorteil dieser erfindungsgemäßen Verfahrensvariante ist darin zu sehen, daß grüne Tiefkühlteiglinge, sogenannte Rohlinge, direkt in die Vorrichtung 1 eingeschossen werden können. Letzteres ist mit dem Stand der Technik entsprechenden Backöfen nicht möglich. Werden die Rohlinge direkt in die Vorrichtung 1 eingeschossen, so ist es möglich, diese im Backraum 4 beispielsweise mit Mikrowelle aufzutauen und dann das genannte Verfahren dieser Ausführungsvariante zu durchlaufen. Dazu sollte aber zur Erreichung eines optimalen Backergebnisses, insbesondere um die Tiefkühlteiglinge schonend auf die richtige Gartemperatur zu bringen, die Temperatur in den Tiefkühlteiglingen durch den Einsatz von beispielsweise speziellen Kerntemperaturfühlern, den Sonden 28, überwacht werden. Mit Hilfe dieser Kerntemperaturfühler ist es möglich, die zuzuführende Mikrowellenenergie so zu steuern, daß der Kern nicht so schnell heiß bzw. überhitzt wird.

Werden die Grünlinge mit Mikrowellenenergie aufgetaut, so ist es möglich, an die Auftauphase eine Vorwärmphase für den Backraum 4 der Vorrichtung 1 anzuschliessen. Dazu kann in den Backraum 4 so lange Feuchtigkeit, beispielsweise Dampf, eingeleitet werden, bis sich im Backraum 4 ein Temperaturniveau von 90 °C eingestellt hat. Im Anschluß daran kann dieses Temperaturniveau wieder auf 60 °C erniedrigt werden und erneut mit beispielsweise Dampf auf 90 °C erhitzt werden. Dadurch wird erreicht, daß im Backraum 4 so viel Feuchtigkeit vorhanden ist, daß ein Austrocknen von Lebensmitteln und/oder Backwaren 2 verhindert werden kann. Selbstverständlich ist der letzte Schritt nur optional zu sehen, da besagtes Vorwärmen, bei dem in einem Schritt mit Dampf auf eine Temperatur von 90 °C erwärmt wird, insbesondere bei durchschnittlich üblichen Beschickungsmengen, eine ausreichende Feuchtigkeitsversorgung des Backraums 4 ermöglicht.

Als Vorteil kann sich auch erweisen, wenn in einem Zeitraum zwischen 45 Sek. und 1 Min. 15 Sek., insbesondere 1 Min., der Backraum 4 nur mit Dampf beaufschlagt wird und erst danach die eigentliche Heizleistung in den Ofen eingebracht wird. Dadurch kann eine weitere Steigerung des Feuchtigkeitsgehaltes im Backraum 4 erreicht werden.

Alle diese Maßnahmen dienen vor allem dazu, daß im Backraum 4 ein Ist-Wert von 100 % relative Luftfeuchtigkeit rasch und mit großer Sicherheit eingestellt werden kann, sodaß in der Folge die Abweichungen zwischen dem Soll- und dem Ist-Wert gering sind bzw. der Regelaufwand minimiert werden kann.

Natürlich ist es auch möglich, diese Verfahrensvariante entsprechend adaptiert für Halbfertigfabrikate zu verwenden.

In oben beschriebenem Verfahren erfolgt die Temperaturregelung beispielsweise mit PDI-Reglern, welche in konstanten Zeitintervallen die Temperatur messen und bei Feststellung von Temperaturabweichungen entsprechende Regelmechanismen in Gang setzen. Dadurch soll erreicht werden, daß entsprechend einem vorgegebenen Temperaturverlauf für den Backvorgang die Abweichungen zwischen Ist- und Soll-Wert möglichst gering sind. Im Gegensatz zu diesem Verfahren der "lernfähigen Kurve" ist es auch möglich, folgende Ausführungsvariante für ein erfindungsgemäßes Backverfahren einzusetzen.

Nach dem Einschießen der tiefgekühlten bzw. halbfertigen Lebensmittel, insbesondere Backwaren 2, wird über zumindest einen Kältefühler im Backraum 4 anhand des Temperaturabfalls durch die eingebrachte Kältemenge festgestellt, welches Volumen an kalten Backwaren eingebracht wurde. Dies setzt einen Regelmechanismus in Gang, der anhand von hinterlegten Soll-Werten für Temperatur und relative Luftfeuchtigkeit den weiteren Verfahrensablauf für die jeweiligen Produkte festlegt. Werden in den Backraum 4 die zu verarbeitenden Produkte auf mehreren Etagen eingebracht, so kann es sich als Vorteil erweisen, daß über den Backraum 4 mehrere Kältefühler verteilt sind, sodaß in der Folge der Temperaturabfall exakter bestimmt und die Fertigung mit verkürztem Zeitaufwand und verbesserter Qualität erfolgen kann.

Für den weiteren Verfahrensablauf ist es möglich, jene Produktionsschritte zu durchlaufen, welche bereits in den voranstehend beschriebenen Ausführungen dargestellt wurden. Dies kann entsprechend einem hinterlegten Backprogramm automatisch ohne weiteren Soll/Ist-Vergleich erfolgen. Von Vorteil ist es aber, auch während dieser Zeitspanne sowohl die Temperatur als auch die relative Luftfeuchtigkeit über im Backraum 4 angeordnete Meßwertgeber 8, 9, welche mit der Steuervorrichtung 16 in Verbindung stehen, zu überwachen.

Nach einer weiteren Ausführungsvariante des erfindungsgemäßen Verfahrens kann die Vorrichtung 1, insbesondere ein Ofen, so ausgestattet sein, daß diese als Tiefkühlgerät zu verwenden ist. Durch eine derart kombinierte Kühl-/Backvorrichtung wird es möglich, eine Teil des Herstellungsprozesses in einen Zeitraum zu verlegen, in dem kein Bedienungspersonal zur Verfügung steht. Kombinierte Kühl-/Backvorrichtungen werden mit Vorteil immer dann eingesetzt, wenn diese beispielsweise in Lebensmittelgeschäften aufgestellt werden. Der Vorteil entsteht dadurch, daß die Rohlinge tagsüber vorbereitet und in der kombinierten Kühl-/Backvorrichtung bis zum Start des Produktionszeitraumes des erfindungsgemäßen Verfahrens so gelagert werden können, daß kein Qualitätsverlust auftritt. Die Programmautomatik der kombinierten Kühl-/Backvorrichtung übernimmt dann beispielsweise automatisch in jenen Stunden, in denen derartige Geschäfte nicht geöffnet haben, den Backvorgang. Dazu werden, wie bereits erwähnt, beispielsweise mit Hilfe von Mikrowellenenergie die eingebrachten Teiglinge aufgetaut und dann in der Folge den einzelnen Verfahrensschritten unterzogen, sodaß sofort bei Geschäftsbeginn frisches Gebäck zur Verfügung steht.

Um ein derartiges Verfahren mit der Vorrichtung 1 zu ermöglichen, muß in der Vorrichtung 1 eine Einrichtung angebracht sein, die ein Herabkühlen des Backraums 4 ermöglicht. Diese Einrichtung kann beispielsweise als Kühlkreislauf ausgeführt sein, wobei zumindest an einer Seitenwand bzw. in einer Seitenwand des Gehäuses 3 Kühlschlangen vorhanden sein können. Durch diese Kühlschlangen fließt ein dem Stand der Technik übliches Kühlmittel, um die abzuführende Wärme aufzunehmen. Im übrigen kann der Kühlkreislauf aus dem Stand der Technik entsprechenden Baueinheiten aufgebaut sein. Die Regelung des Kühlkreislaufes erfolgt bevorzugt über eigene Temperaturfühler, welche wiederum mit der Steuereinrichtung 16 verbunden sind, kann aber auch über jene Temperaturmeßwertgeber erfolgen, die den Backvorgang überwachen.

Bei jedem der beschriebenen Ausführungsvarianten für ein erfindungsgemäßes Verfahren kann als letzter Verfahrensschritt eine halbautomatische Reinigung des Backraums 4 erfolgen. Dazu ist es möglich, daß der Backraum 4 mit oder ohne eingeschobene Backbleche 15 mit Dampf versetzt wird, wodurch sich anhaftende Reste von Backwaren lösen lassen. Unterstützend ist es selbstverständlich möglich, herkömmliche, handelsübliche Reinigungsmittel einzusetzen. Die Dampfzufuhr kann über zumindest eine Düse, welche sich bevorzugt in der Deckplatte 13 des Gehäuses 3 befindet, erfolgen. Zur Effizienzsteigerung können aber selbstverständlich über das gesamte Gehäuse 3 mehrere Dampfdüsen verteilt sein. Nach einer Aufweichzeit, die beispielsweise im Bereich zwischen 3 Min. bis 25 Min. liegen kann, ist es möglich, mit beispielsweise einer eingebauten Schlauchbrause die Reste abzuspülen, wobei das Spülwasser bevorzugt über eine Abflußöffnung in der Bodenplatte des Backraums 4 abfließt. Eine Reinigung des Spülwassers von Festteilchen ist beispielsweise mit Sieben möglich. Vorteilhafterweise ist die Ablauföffnung für das Spülwasser eine andere als jene Ablauföffnung, welche Kondenswasser aufnehmen soll, das während des Backvorganges entsteht. Somit stehen zwei getrennte Kreisläufe jeweils für Schmutzwasser bzw. Reinwasser zur Verfügung.

Der Ordnung halber sei abschließend darauf hingewiesen, daß zum besseren Verständnis des Aufbaus der Vorrichtung 1 diese bzw. deren Bestandteile teilweise unmaßstäblich und/oder vergrößert und/oder verkleinert dargestellt wurden.

### Bezugszeichenaufstellung

- 1: Vorrichtung
- 2: Backware
- 3: Gehäuse
- 4: Backraum
- 5: Tür

- 6: Glasscheibe
- 7: Heizvorrichtung
- 8: Meßwertgeber
- 9: Meßwertgeber
- 10: Zufuhrvorrichtung

- 11: Fluid
- 12: Austragelement
- 13: Deckplatte
- 14: Boden
- 15: Backblech

- 16: Steuervorrichtung
- 17: Leitung
- 18: Leitung
- 19: Leitung
- 20: Fördervorrichtung

- 21: Energiequelle
- 22: Speicherbehälter
- 23: Dampferzeuger
- 24: Leitung
- 25: Zwischenraum

- 26: Eingabeorgan
- 27: Eingabeorgan
- 28: Sonde
- 29: Leitung
- 30: Zeitgeber

- 31: Zufuhrvorrichtung
- 32: Mikrowellenerzeuger

## Patentansprüche

1. Vorrichtung (1) zur Herstellung von Backwaren (2), insbesondere zum Garen und/oder Backen von Lebensmitteln oder Backwaren (2), mit einem Backraum (4) mit einer Heizvorrichtung (7) für den Backraum (4), mit einer Zufuhrvorrichtung (10, 31) für ein Fluid (11) mit zumindest einem im Backraum (4) angeordneten Austragelement (12) und mit zumindest einem Meßwertgeber (8) zumindest zum Erfassen eines Ist-Wertes einer Temperatur und zumindest einem weiteren Meßwertgeber (9) zur Ermittlung eines Ist-Wertes der Luftfeuchtigkeit im Backraum (4) und mit einer Steuervorrichtung (16), die mit der Heizvorrichtung (7), den Meßwertgebern (8, 9) sowie der Zufuhrvorrichtung (10, 31) und einer Energiequelle (21) verbunden ist und die mit einem Eingabeorgan (26, 27) für einen Soll-Wert der Luftfeuchtigkeit und/oder der Temperatur, gegebenenfalls in Abhängigkeit von einer mit einem Zeitgeber (30) festlegbaren Back- bzw. Gardauer versehen ist, wobei das zumindest eine Austragelement (12) der Zufuhrvorrichtung (10, 31) zur Zufuhr des Fluides (11) in flüssigem, gas- oder dampfförmigen Zustand ausgebildet ist, **dadurch gekennzeichnet, daß** im Backraum (4) zumindest ein Kältefühler angeordnet ist zum Ermitteln des Volumens des eingebrachten lebensmittel und/oder Backwaren über den Temperaturabfall im Backraum (4).

2. Vorrichtung nach Anspruch 1, **dadurch gekennzeichnet, daß** beim Auftreten einer Differenz zwischen dem Soll- und Ist-Wert der Luftfeuchtigkeit und/oder dem Soll- und Ist-Wert der Temperatur und/oder der jeweiligen Gar- bzw. Backzeit die Luftfeuchtigkeit und/oder die Temperatur im Backraum (4) durch Zu- oder Abfuhr von Feuchtigkeit und/oder Wärme mit der Zuführvorrichtung (10, 31) und/oder auf den Soll-Wert rückführbar ist.

3. Vorrichtung nach Anspruch 1 oder 2, **dadurch gekennzeichnet, daß** bei einem Überschreiten der Soll-Temperatur im Backraum (4) die Zufuhrvorrichtung (10, 31) über die Steuervorrichtung (16) für die Zufuhr von Fluid (11) und/oder Kühlluft zum Backraum (4) beaufschlagt ist.

4. Vorrichtung nach einem der vorhergehenden Ansprüche, **dadurch gekennzeichnet, daß** bei einem Überschreiten des Soll-Wertes der Luftfeuchtigkeit im Backraum (4) die Zuführvorrichtung (10, 31) zum Entziehen von Feuchtigkeit oder zur Zufuhr von trockener Frischluft beaufschlagt ist.

5. Vorrichtung nach einem der vorhergehenden Ansprüche, **dadurch gekennzeichnet, daß** die Steuervorrichtung (16) die Differenz zwischen den Soll- und Ist-Werten der Luftfeuchtigkeit und/oder Temperatur im Backraum (4) intermittierend ermittelt.

6. Vorrichtung nach einem der vorhergehenden Ansprüche, **dadurch gekennzeichnet, daß** die Differenz zwischen dem Soll- und Ist-Wert der Temperatur und/oder der Luftfeuchtigkeit nach zumindest einer voreinstellbaren Dauer der Gar- und/oder Backzeit und/oder bei voreinstellbaren Werten der Temperatur im Backraum (4) feststellbar ist.

7. Vorrichtung nach einem der vorhergehenden Ansprüche, **dadurch gekennzeichnet, daß** die Steuervorrichtung (16) einen programmierbaren Rechner umfaßt, der zumindest ein Speicherelement zum Hinterlegen von zumindest einem Soll-Wert für die Luftfeuchtigkeit und/oder die Temperatur und/oder die Gar- bzw. Backzeit aufweist.

8. Vorrichtung nach einem der vorhergehenden Ansprüche, **dadurch gekennzeichnet, daß** das Fluid (11) im flüssigen und/oder gas- und/oder dampfförmigen Zustand, insbesondere als Wasserdampf in den Backraum (4) unter Überdruck einbringbar und/oder einblasbar ist.

9. Vorrichtung nach einem der vorhergehenden Ansprüche, **dadurch gekennzeichnet, daß** das Fluid (11) im flüssigen und/oder gas- und/oder dampfförmigen Zustand, insbesondere als Wasserdampf in den Backraum (4) unter Unterdruck einbringbar und/oder einblasbar ist.

10. Vorrichtung nach einem der vorhergehenden Ansprüche, **dadurch gekennzeichnet, daß** die Austragelemente (12) für das Fluid (11) über die dem Backraum (4) zugewandte Oberfläche, insbesondere über die Deckplatte (13) verteilt angeordnet sind.

11. Vorrichtung nach einem der vorhergehenden Ansprüche, **dadurch gekennzeichnet, daß** über zumindest eine Sonde (28) im Backraum (4) die Kerntemperatur von Lebensmitteln oder Backwaren (2) erfaßt werden kann.

12. Vorrichtung nach einem der vorhergehenden Ansprüche, **dadurch gekennzeichnet, daß** im Backraum (4) zumindest eine Einrichtung zur Erzeugung und Übertragung von Mikrowellenwärmeenergie vorhanden ist.

13. Vorrichtung nach einem der vorhergehenden Ansprüche, **dadurch gekennzeichnet, daß** der Kältefühler und/oder der Meßwertgeber (8) zur Überwachung der Temperatur aus einem Kontaktthermometer, Widerstandsthermometer, Thermoelement, oder dgl. aufgebaut ist.

14. Vorrichtung nach einem der vorhergehenden Ansprüche, **dadurch gekennzeichnet, daß** im Backraum (4) zumindest eine Reinigungsvorrichtung angeordnet ist.

15. Vorrichtung nach Anspruch 14, **dadurch gekennzeichnet, daß** die Reinigungsvorrichtung Düsen zur Steuerung eines Fluides bzw. zur Abgabe von Dampf in den Backraum (4) sowie ein Ablaufsystem und eine Schlauchbrause umfaßt.

16. Vorrichtung nach einem der vorhergehenden Ansprüche, **dadurch gekennzeichnet, daß** die Vorrichtung (1) mit einem Kühlkreislauf zum Kühlen des Backraums (4) kombiniert ist.

17. Vorrichtung nach Anspruch 16, **dadurch gekennzeichnet, daß** der Kühlkreislauf aus Kühlschlangen, zumindest einem Kompressor und einem Verdampfer aufgebaut ist.

18. Verfahren zum Garen und/oder Backen von Lebensmitteln oder Backwaren (2) in einem Backraum (4), bei dem die insbesondere zuvor tiefgefrorenen Lebensmittel und/oder Backwaren (2) zum Garen bzw. Backen oder Vorgaren bzw. Vorbacken erwärmt und dabei einer voreinstellbaren Luftfeuchtigkeit ausgesetzt werden, wobei Soll-Werte für die Temperatur und/oder Luftfeuchtigkeit in Abhängigkeit von der Gar- bzw. Backzeit vordefiniert werden und danach während des Garens und Backens der Lebensmittel oder Backwaren (2) die jeweiligen Ist-Werte der Luftfeuchtigkeit und/oder der Temperatur in Abhängigkeit von der Gar- bzw. Backzeit ermittelt werden, **dadurch gekennzeichnet, daß** nach dem Einbringen der Lebensmittel und/oder Backwaren (2) in den Backraum (4) deren Volumen über den Temperaturabfall im Backraum (4) mit zumindest einem Kältefühler festgestellt wird.

19. Verfahren nach Anspruch 18, **dadurch gekennzeichnet, daß** der Backraum (4) der Vorrichtung (1) vor dem Gar- und/oder Backvorgang mit Dampf und/oder Heißluft auf eine Temperatur zwischen 80 °C und 100 °C, insbesondere 90 °C, erhitzt wird.

20. Verfahren nach Anspruch 18, **dadurch gekennzeichnet, daß** die Temperatur im Backraum (4) während einer Vorwärmphase auf 60 °C abgesenkt und anschließend mit Dampf auf 90 °C erhöht wird.

21. Verfahren nach einem der Ansprüche 18 bis 20, **dadurch gekennzeichnet, daß** der Backraum (4) vor einer Restgare der Lebensmittel oder Backwaren (2) zwischen 45 Sek. und 1 Min. 15 Sek., bevorzugt 1 Min., mit Dampf beaufschlagt wird.

22. Verfahren nach einem der Ansprüche 18 bis 21, **dadurch gekennzeichnet, daß** die Lebensmittel oder Backwaren (2) vor dem Gar- und/oder Backvorgang mit Mikrowellenenergie im Backraum (4) erwärmt werden und daran anschließend der Backraum (4) mit Dampf beheizt wird.

23. Verfahren nach Anspruch 22, **dadurch gekennzeichnet, daß** die Abgabe an Mikrowellenenergie in den Backraum (4) über Sonden (28), insbesondere Kerntemperaturfühler, geregelt wird.

24. Verfahren nach einem der Ansprüche 18 bis 23, **dadurch gekennzeichnet, daß** die Luftfeuchtigkeit durch Feuchtigkeitszufuhr oder -entzug sowie die Temperatur der Backwaren (2) durch Wärmezufuhr oder -entzug auf den Soll-Wert rückgeführt wird.

25. Verfahren nach einem der Ansprüche 18 bis 24, **dadurch gekennzeichnet, daß** das Auftauen von tiefgekühlten Lebensmitteln oder Backwaren (2) in einem Zeitraum zwischen 30 Sek. und 2 Min., bevorzugt 45 Sek. bis 1 Min. 45 Sek., bei 70 °C bis 120 °C, bevorzugt 90 °C bis 100 °C und bevorzugt 100 % Luftfeuchtigkeit erfolgt.

26. Verfahren nach einem der Ansprüche 18 bis 25, **dadurch gekennzeichnet, daß** die Restgare in einem Temperaturbereich zwischen 90 °C bis 160 °C, bevorzugt 110 °C bis 140 °C, bei einem Ist-Wert der relativen Luftfeuchtigkeit von 40 % bis 90 %, bevorzugt 60 % bis 70 % erfolgt.

27. Verfahren nach einem der Ansprüche 18 bis 26, **dadurch gekennzeichnet, daß** vor dem Backen ein Ablüften und gleichzeitiges Aufheizen des Backraums (4) mit Heißluft erfolgt.

28. Verfahren nach einem der Ansprüche 18 bis 27, **dadurch gekennzeichnet, daß** das Backen in einen Temperaturbereich zwischen 180 °C bis 230 °C bei bevorzugt 20 % bis 80 % relativer Luftfeuchtigkeit erfolgt.

29. Verfahren nach einem der Ansprüche 18 bis 28, **dadurch gekennzeichnet, daß** nach dem Backabschnitt zur Entfernung von Feuchtigkeit ein Ablüften durchgeführt wird.

30. Verfahren nach einem der Ansprüche 18 bis 29, **dadurch gekennzeichnet, daß** die fertigen und heißen Produkte mit einem Fluid (11), z.B. Wasser oder dgl., besprüht werden.

31. Verfahren nach einem der Ansprüche 18 bis 30, **dadurch gekennzeichnet, daß** die Kemtemperatur der zu verarbeitenden Lebensmittel und/oder Backwaren (2) mit zumindest einer Sonde (28) gemessen wird.

32. Verfahren nach einem der Ansprüche 18 bis 31, **dadurch gekennzeichnet, daß** der Temperaturverlauf und der Gehalt an Feuchtigkeit im Backraum (4) an den Temperaturabfall durch die eingeschossenen Lebensmittel und/oder Backwaren (2) in den Backraum (4) sowie auf die Art des herzustellenden Produktes abgestimmt wird.

33. Verfahren nach einem der Ansprüche 18 bis 32, **dadurch gekennzeichnet, daß** die zu verarbeitenden Lebensmittel und/oder Backwaren (2) vor dem Backvorgang im Backraum (4) gekühlt gelagert werden und daß daran anschließend zu einem vordefinierbaren Zeitpunkt der Verfahrensablauf zur Fertigstellung der Produkte automatisch gestartet wird.

34. Verfahren nach einem der Ansprüche 18 bis 33, **dadurch gekennzeichnet, daß** nach dem Abschluß des Backvorganges der Backraum (4) mit Hilfe eines Fluides (11) entsprechender Temperatur, z.B. Dampf, halbautomatisch gereinigt wird.

35. Verfahren nach Anspruch 34, **dadurch gekennzeichnet, daß** während des Reinigungsschrittes in einer Zeitspanne zwischen 3 Min. bis 25 Min. die Innenflächen des Backraums (4) und/oder die Bleche mit Dampf beaufschlagt werden.

## Claims

1. Device (1) for producing items of bakery (2), in particular for fermenting and/or baking foodstuffs or bakery items (2), with an oven (4) having a heating device (7) for the oven (4), a delivery system (10, 31) for a fluid (11) comprising at least one discharge element (12) disposed in the oven (4) and at least one measurement transmitter (8) for detecting at least one actual value of a temperature and at least one other measurement transmitter (9) for detecting an actual value of the air humidity in the oven (4), and having a control system (16) which is connected to the heating device (7), the measurement transmitters (8, 9) and the delivery system (10, 31) as well as a power source (21), and which is provided with a setting element (26, 27) for a desired value of the air humidity and/or temperature, optionally correlated to a baking or fermenting time which can be set by means of a timer (30), wherein the at least one discharge element (12) of the delivery system (10, 31) is designed to introduce the fluid (11) in a liquid, gaseous or vapour state, **characterised in that** at least one cold sensor is provided in the oven (4) for detecting the volume of foodstuffs and/or bakery items on the basis of the drop in temperature in the oven (4).

2. Device as claimed in claim 1, **characterised in that**, when a difference occurs between the desired and actual value of the air humidity and/or the desired and actual value of the temperature and/or the respective fermenting or baking time, the air humidity and/or the temperature in the oven (4) can be restored to the desired value by introducing or removing moisture and/or heat by means of the delivery system (10, 31).

3. Device as claimed in claim 1 or 2, **characterised in that** if the desired temperature in the oven (4) is exceeded, the delivery system (10,31) is activated by the control system (16) in order to introduce fluid (11) and/or cool air into the oven (4).

4. Device as claimed in one of the preceding claims, **characterised in that** if the desired value of the air humidity in the oven (4) is exceeded, the delivery system (10, 31) is activated in order to remove moisture or introduce dry fresh air.

5. Device as claimed in one of the preceding claims, **characterised in that** the control system (16) detects the difference between the desired and actual values of the air humidity and/or temperature in the oven (4) on an intermittent basis.

6. Device as claimed in one of the preceding claims **characterised in that** the difference between the desired and actual value of the temperature and/or the air humidity can be detected after at least a pre-settable period of the fermenting and/or baking time and/or when the temperature in the oven (4) reaches pre-settable values.

7. Device as claimed in one of the preceding claims, **characterised in that** the control system (16) incorporates a programmable computer, which has at least one memory element for storing at least one desired value for the air humidity and/or the temperature and/or the fermenting and baking time.

8. Device as claimed in one of the preceding claims, **characterised in that** the fluid (11) can be introduced and/or blasted into the oven (4) in a liquid and/or gaseous and/or vapour state, in particular as steam, at a pressure above atmospheric pressure.

9. Device as claimed in one of the preceding claims, **characterised in that** the fluid (11) can be introduced and/or blasted into the oven (4) in a liquid and/or gaseous and/or vapour state at a vacuum pressure.

10. Device as claimed in one of the preceding claims, **characterised in that** the discharge elements (12) for the fluid (11) are distributed across the surface directed towards the oven (4), in particular across the top plate (13).

11. Device as claimed in one of the preceding claims, **characterised in that** the core temperature of foodstuffs or bakery items (2) can be detected by means of at least one probe (28) in the oven (4).

12. Device as claimed in one of the preceding claims, **characterised in that** at least one unit is provided in the oven (4) for generating and transmitting microwave heating energy.

13. Device as claimed in one of the preceding claims, **characterised in that** the cold sensor and/or the measurement transmitter (8) is programmed to monitor the temperature from a contact thermometer, resistance thermometer, thermocouple or similar.

14. Device as claimed in one of the preceding claims, **characterised in that** at least one cleaning system is provided in the oven (4).

15. Device as claimed in claim 14, **characterised in that** the cleaning system comprises nozzles for controlling a fluid or for dispensing steam into the oven (4), as well as a drainage system and a hose spray.

16. Device as claimed in one of the preceding claims, **characterised in that** the device (1) is combined with a coolant circuit for cooling the oven (4).

17. Device as claimed in claim 16, **characterised in that** the coolant circuit is made up of cooling coils, at least one compressor and an evaporator.

18. Method of fermenting and/or baking foodstuffs or bakery items (2) in an oven (4), whereby in particular previously deep-frozen foodstuffs or bakery items (2) can be heated for fermenting and baking or pre-fermenting and pre-baking, during which they are subjected to a pre-settable air humidity, for which purpose desired values for the temperature and/or air humidity are predefined depending on the fermenting and baking time, after which, whilst the foodstuffs or bakery items (2) are fermenting and baking, the respective actual values of the air humidity and/or the temperature are detected depending on the fermenting or baking time, **characterised in that** when the foodstuffs or bakery items (2) are introduced into the oven (4), their volume is determined on the basis of the drop in temperature in the oven (4) by means of at least one cold sensor.

19. Method as claimed in claim 18, **characterised in that** the oven (4) of the device (1) is heated to a temperature of between 80°C and 100°C, in particular 90°C with steam and/or hot air, prior to the fermenting and/or baking process.

20. Method as claimed in claim 18, **characterised in that** the temperature in the oven (4) is reduced to 60°C during a pre-heating phase and then raised to 90°C with steam.

21. Method as claimed in one of claims 18 to 20, **characterised in that**, prior to a process of final fermentation of the foodstuffs or bakery items (2), steam is introduced into the oven (4) for between 45 seconds and 1 minute 15 seconds, preferably 1 minute.

22. Method as claimed in one of claims 18 to 21, **characterised in that** the foodstuffs or bakery items (2) are heated in the oven (4) by means of microwave energy before the fermenting and/or baking process, after which the oven (4) is heated with steam.

23. Method as claimed in claim 22, **characterised in that** the microwave energy emitted in the oven (4) is regulated by means of probes (28), in particular core temperature sensors.

24. Method as claimed in one of claims 18 to 23, **characterised in that** the air humidity is kept at the desired value by introducing or removing moisture and the temperature of the bakery items (2) is kept at the desired value by introducing or removing heat.

25. Method as claimed in one of claims 18 to 24, **characterised in that** deep-frozen foodstuffs or bakery items (2) are thawed within a period of between 30 seconds and 2 minutes, preferably 45 seconds to 1 minute 45 seconds, at between 70°C and 120°C, preferably 90°C to 100°C, and preferably at 100 % air humidity.

26. Method as claimed in one of claims 18 to 25, **characterised in that** the final fermentation takes place at a temperature within the range of between 90°C and 160°C, preferably 110°C to 140°C, with the relative air humidity at an actual value of from 40 % to 90 %, preferably 60 % to 70 %.

27. Method as claimed in one of claims 18 to 26, **characterised in that** the oven (4) is vented and simultaneously heated with hot air prior to baking.

28. Method as claimed in one of claims 18 to 27, **characterised in that** baking takes place at a temperature within the range of between 180°C and 230°C, preferably at a relative air humidity of 20 % to 80%.

29. Method as claimed in one of claims 18 to 28, **characterised in that** a venting process is run after the baking section in order to remove moisture.

30. Method as claimed in one of claims 18 to 29, **characterised in that** the finished and hot products are sprayed with a fluid (11), e.g. water.

31. Method as claimed in one of claims 18 to 30, **characterised in that** the core temperature of the foodstuffs and/or bakery items (2) to be processed is measured by means of at least one probe (28).

32. Method as claimed in one of claims 18 to 31, **characterised in that** changes in temperature and the moisture level in the oven (4) are controlled depending on the drop in temperature caused by the introduction of foodstuffs and/or bakery items (2) into the oven (4) and the nature of the product to be processed.

33. Method as claimed in one of claims 18 to 32, **characterised in that** the foodstuffs and/or bakery items (2) to be processed are stored in the oven (4) and cooled prior to the baking process and the process sequence for producing the products is automatically started after a pre-definable time.

34. Method as claimed in one of claims 18 to 33, **characterised in that** on completion of the baking process, the oven (4) is semi-automatically cleaned with the aid of a fluid (11) at an appropriate temperature, e.g. steam.

35. Method as claimed in claim 34, **characterised in that** during the cleaning step, steam is applied to the internal surfaces of the oven (4) and/or the trays for a period of between 3 minutes and 25 minutes.

## Revendications

1. Dispositif(1) pour fabriquer des pâtisseries (2), notamment pour la cuisson d'aliments ou de pâtisseries (2), avec une enceinte de cuisson (4) avec un dispositif de chauffage (7) pour l'enceinte de cuisson (4), avec un dispositif d'amenée (10, 31) pour un fluide (11) avec au moins un élément d'évacuation (12) disposé dans l'enceinte de cuisson (4) et avec au moins un capteur de valeurs de mesure (8) au moins pour la détection d'une valeur réelle d'une température et avec au moins un autre capteur de valeurs de mesure (9) pour déterminer une valeur réelle de l'humidité de l'air dans l'enceinte de cuisson (4) et avec un dispositif de commande (16) qui est relié au dispositif de chauffage (7), aux capteurs de valeurs de mesure (8, 9) et au dispositif d'amenée (10, 31) et à une source d'énergie (21) et qui est pourvu d'un organe d'entrée (26, 27) pour une valeur de consigne de l'humidité d'air et/ou de la température, le cas échéant en fonction d'une durée de cuisson pouvant être fixée par une horloge (30), où au moins un élément d'évacuation (12) du dispositif d'amenée (10, 31) est réalisé pour l'amenée du fluide (11) à l'état liquide, gazeux ou en forme de vapeur, **caractérisé en ce qu'**il est disposé dans l'enceinte de cuisson (4) au moins un détecteur du froid, pour déterminer le volume des aliments et/ou pâtisseries introduits par la chute de température dans l'enceinte de cuisson (4).

2. Dispositif selon la revendication 1, **caractérisé en ce que** lors de l'apparition d'une différence entre les valeurs de consigne et réelle de l'humidité d'air et/ou les valeurs de consigne et réelle de la température et/ou de la durée de cuisson respective, l'humidité d'air et/ou la température dans l'enceinte de cuisson (4) peut être ramenée par une amenée ou évacuation d'humidité et/ou de chaleur avec le dispositif d'amenée (10, 31) et/ou à la valeur de consigne.

3. Dispositif selon la revendication 1 ou 2, **caractérisé en ce que** lors d'un dépassement de la température de consigne dans l'enceinte de cuisson (4), le dispositif d'amenée (10, 31) est chargé par le dispositif de commande (16) pour l'amenée du fluide (11) et/ou de l'air de refroidissement à l'enceinte de cuisson (4).

4. Dispositif selon l'une des revendications précédentes, **caractérisé en ce que** lors d'un dépassement de la valeur de consigne de l'humidité d'air dans l'enceinte de cuisson (4), le dispositif d'amenée (10, 31) est chargé en vue d'un retrait d'humidité ou d'une amenée d'air frais sec.

5. Dispositif selon l'une des revendications précédentes, **caractérisé en ce que** le dispositif de commande (16) détermine par intermittence la différence entre les valeurs de consigne et réelle de l'humidité d'air et/ou de la température dans l'enceinte de cuisson (4).

6. Dispositif selon l'une des revendications précédentes, **caractérisé en ce que** la différence entre les valeurs de consigne et réelle de la température et/ou de l'humidité d'air peut être constatée après au moins une durée pré-réglable du temps de cuisson et/ou à des valeurs pré-réglables de la température dans l'enceinte de cuisson (4).

7. Dispositif selon l'une des revendications précédentes, **caractérisé en ce que** le dispositif de commande (16) comprend un calculateur programmable qui présente au moins un élément de stockage pour déposer au moins une valeur de consigne se rapportant à l'humidité d'air et/ou à la température et/ou au temps de cuisson.

8. Dispositif selon l'une des revendications précédentes, **caractérisé en ce que** le fluide (11) peut être introduit et/ou soufflé sous sur-pression à l'état liquide et/ou gazeux et/ou en forme de vapeur, notamment comme vapeur d'eau dans l'enceinte de cuisson (4).

9. Dispositif selon l'une des revendications précédentes, **caractérisé en ce que** le fluide (11) peut être introduit et/ou soufflé sous dépression à l'état liquide et/ou gazeux et/ou en forme de vapeur, notamment comme vapeur d'eau, dans l'enceinte de cuisson (4).

10. Dispositif selon l'une des revendications précédentes, **caractérisé en ce que** les éléments d'évacuation (12) du fluide (11) sont répartis sur la surface orientée vers l'enceinte de cuisson (4), notamment sur la plaque de recouvrement (13).

11. Dispositif selon l'une des revendications précédentes, **caractérisé en ce que** par au moins une sonde (28), la température centrale d'aliments ou de pâtisseries (2) peut être détectée dans l'enceinte de cuisson (4).

12. Dispositif selon l'une des revendications précédentes, **caractérisé en ce qu'**il est prévu dans l'enceinte de cuisson (4) au moins une installation pour produire et transférer de l'énergie thermique à micro-ondes.

13. Dispositif selon l'une des revendications précédentes, **caractérisé en ce que** le capteur du froid et/ou le capteur des valeurs de mesure (8) pour la surveillance de la température est constitué par un thermomètre de contact, un thermomètre à résistance, un thermo-élément ou analogue.

14. Dispositif selon l'une des revendications précédentes, **caractérisé en ce qu'**il est disposé dans l'enceinte de cuisson (4) au moins un dispositif de nettoyage.

15. Dispositif selon la revendication 14, **caractérisé en ce que** le dispositif de nettoyage comprend des buses pour la commande d'un fluide respectivement pour l'émission de vapeur dans l'enceinte de cuisson (4) ainsi qu'un système d'écoulement et un élément d'arrosage tubulaire.

16. Dispositif selon l'une des revendications précédentes, **caractérisé en ce que** le dispositif (1) est combiné avec un circuit de refroidissement pour refroidir l'enceinte de cuisson (4).

17. Dispositif selon la revendication 16, **caractérisé en ce que** le circuit de refroidissement est constitué de serpentins de refroidissement, d'au moins un compresseur et un évaporateur.

18. Procédé de cuisson d'aliments ou de pâtisseries (2) dans une enceinte de cuisson (4), où les aliments et/ou pâtisseries (2) notamment préalablement congelés sont chauffés pour la cuisson respectivement la cuisson étuvée et, ce faisant, sont exposés à une humidité d'air pré-réglable, où des valeurs de consigne de la température et/ou de l'humidité d'air sont prédéfinies en fonction de la durée de cuisson et ensuite, pendant la cuisson des aliments ou des pâtisseries (2), les valeurs réelles respectives de l'humidité d'air et/ou de la température sont déterminées en fonction du temps de cuisson, **caractérisé en ce que**, après l'introduction des aliments et/ou pâtisseries (2) dans l'enceinte de cuisson (4), leur volume est constaté par la chute de température dans l'enceinte de cuisson (4) avec au moins un détecteur du froid.

19. Procédé selon la revendication 18, **caractérisé en ce que** l'enceinte de cuisson (4) du dispositif (1) est chauffée avant l'opération de cuisson avec de la vapeur et/ou de l'air chaud à une température comprise entre 80°C et 100°C, notamment à 90°C.

20. Procédé selon la revendication 18, **caractérisé en ce que** la température dans l'enceinte de cuisson (4) est abaissée pendant une phase de préchauffage à 60°C et est augmentée ensuite avec de la vapeur à 90°C.

21. Procédé selon l'une des revendications 18 à 20, **caractérisé en ce que** l'enceinte de cuisson (4), avant une cuisson résiduelle des aliments ou pâtisseries (2), est alimentée entre 45 sec et 1 min 15 sec, de préférence pendant 1 min, en vapeur.

22. Procédé selon l'une des revendications 18 à 21, **caractérisé en ce que** les aliments ou pâtisseries (2), avant l'opération de cuisson, sont chauffés avec de l'énergie à micro-ondes dans l'enceinte de cuisson (4) et ensuite, l'enceinte de cuisson (4) est chauffée avec de la vapeur.

23. Procédé selon la revendication 22, **caractérisé en ce que** l'émission en énergie à micro-ondes est réglée dans l'enceinte de cuisson (4) par des sondes (28), notamment des capteurs de la température du noyau.

24. Procédé selon l'une des revendications 18 à 23, **caractérisé en ce que** l'humidité d'air est ramenée par une amenée ou un retrait d'humidité ainsi que la température des pâtisseries (2) par une amenée ou un retrait de chaleur à la valeur de consigne.

25. Procédé selon l'une des revendications 18 à 24, **caractérisé en ce que** la décongélation d'aliments ou de pâtisseries congelés (2) a lieu dans un lapse de temps entre 30 sec et 2 min, de préférence entre 45 sec à 1 min 45 sec, à 70°C jusqu'à 120°C, de préférence à 90°C à 100°C et de préférence avec 100 % d'humidité d'air.

26. Procédé selon l'une des revendications 18 à 25, **caractérisé en ce que** la cuisson restante a lieu dans une plage de température entre 90°C à 160°C, de préférence entre 110°C à 140°C, à une valeur réelle de l'humidité d'air relative de 40 % à 90 %, de préférence de 60 %à70%.

27. Procédé selon l'une des revendications 18 à 26, **caractérisé en ce qu'**avant la cuisson, on procède à une évacuation d'air et un chauffage simultané de l'enceinte de cuisson (4) avec de l'air chaud.

28. Procédé selon l'une des revendications 18 à 27, **caractérisé en ce que** la cuisson a lieu dans une plage de température entre 180°C à 230°C, à une humidité d'air relative de préférence de 20 % à 80 %.

29. Procédé selon l'une des revendications 18 à 28, **caractérisé en ce qu'**on procède à une évacuation d'air après la phase de cuisson, pour évacuer l'humidité.

30. Procédé selon l'une des revendications 18 à 29, **caractérisé en ce que** les produits finis et chauds sont aspergés avec un fluide (11), par exemple avec de l'eau ou analogue.

31. Procédé selon l'une des revendications 18 à 30, **caractérisé en ce que** la température centrale des aliments et/ou pâtisseries à traiter (2) est mesurée avec au moins une sonde (28).

32. Procédé selon l'une des revendications 18 à 31, **caractérisé en ce que** la courbe de température et la teneur en humidité dans l'enceinte de cuisson (4) est adaptée à la chute de température par les aliments et/ou pâtisseries renfermés (2) dans l'enceinte de cuisson (4) et au type du produit à fabriquer.

33. Procédé selon l'une des revendications 18 à 32, **caractérisé en ce que** les aliments et/ou pâtisseries à traiter (2), avant l'opération de cuisson, sont stockés à l'état refroidi dans l'enceinte de cuisson (4) et qu'ensuite, à un point prédéfinissable, le déroulement du procédé pour fabriquer les produits est démarré automatiquement.

34. Procédé selon l'une des revendications 18 à 33, **caractérisé en ce qu'**après la fin de l'opération de cuisson, l'enceinte de cuisson (4) est nettoyée d'une manière semi-automatique à l'aide d'un fluide (11) d'une température correspondante, par exemple avec de la vapeur.

35. Procédé selon la revendication 34, **caractérisé en ce que** pendant l'étape de nettoyage, dans un lapse de temps entre 3 min à 25 min, les faces intérieures de l'enceinte de cuisson (4) et/ou les tôles sont chargées en vapeur.
